# EUROPEAN PATENT APPLICATION

(11) **EP 4 776 042 A1**
(43) Date of publication of application: **15.07.2026**
(21) Application number: 24862740.8
(22) Date of filing: 30.08.2024
(51) Int. Cl.: G02B 6/36

(54) **OPTICAL CONNECTOR AND PIN KEEPER**

(30) Priority: 08.09.2023 JP 2023146066
(71) Applicant: Sumitomo Electric Optifrontier Co., Ltd., Yokohama-shi, Kanagawa 244-8589 (JP)
(72) Inventor: FUJIHARA Yuto, Yokohama-shi, Kanagawa 244-8589 (JP); SHIBATA Masahiro, Yokohama-shi, Kanagawa 244-8589 (JP)
(74) Representative: TBK
(86) International application number: PCT/JP2024/031362
(87) International publication number: WO 2025/053088

(57) **Abstract**

An optical connector of the present disclosure comprising: a ferrule member including a rear end surface, an introduction hole which opens in the rear end surface and into which an optical fiber can be introduced, and a guide hole which opens in the rear end surface and into which a guide pin can be inserted, the ferrule member holding the optical fiber introduced from the introduction hole; a pin keeper which faces the rear end surface and can hold the guide pin protruding from the guide hole; and a housing configured to accommodate the ferrule member and the pin keeper. The pin keeper includes: a metal plate configured to face the rear end surface; and a slit formed to extend from a side edge of the metal plate when viewed in a plate thickness direction of the metal plate. The slit includes a holding portion configured so that the guide pin is inserted and held.

## Description

### Technical Field

The present disclosure relates to an optical connector and a pin keeper. This application claims priority based on Japanese Patent Application No. 2023-146066 filed on September 8, 2023, the entire contents of which are incorporated herein by reference.

### Background Art

Patent Literature 1 to 9 disclose technologies related to optical connectors. For example, Patent Literature 1 discloses a pin keeper that holds a pin inserted into a ferrule of an optical connector. The pin keeper enables the pin inserted into the ferrule to be held and released in a state in which the pin keeper is incorporated in the optical connector. The optical connector including such a pin keeper that enables the pin to be inserted and removed enables switching between male and female states of the optical connector.

### Citation List

### Patent Literature

[Patent Literature 1] Japanese Unexamined Patent Application, First Publication No. 2016-139092
[Patent Literature 2] Japanese Unexamined Patent Publication No. 2001-296450
[Patent Literature 3] Japanese Unexamined Patent Publication No. 2020-170135
[Patent Literature 4] Japanese Unexamined Patent Publication No. 2020-204707
[Patent Literature 5] Japanese Unexamined Patent Publication No. 2021-135496
[Patent Literature 6] United States Patent Application, Publication No. 2021/0278605
[Patent Literature 7] PCT International Publication No. WO/2012/096246
[Patent Literature 8] Japanese Unexamined Patent Publication No. 2002-082257
[Patent Literature 9] Japanese Unexamined Patent Publication No. 2009-205100

### Summary of Invention

An optical connector of the present disclosure comprises: a ferrule member including a rear end surface, an introduction hole which opens in the rear end surface and into which an optical fiber can be introduced, and a guide hole which opens in the rear end surface and into which a guide pin can be inserted, the ferrule member holding the optical fiber introduced from the introduction hole; a pin keeper which faces the rear end surface and can hold the guide pin protruding from the guide hole; and a housing configured to accommodate the ferrule member and the pin keeper. The pin keeper includes: a metal plate configured to face the rear end surface; and a slit formed to extend from a side edge of the metal plate when viewed in a plate thickness direction of the metal plate. The slit includes a holding portion configured so that the guide pin is inserted and held.

### Brief Description of Drawings

FIG. 1 is a perspective view showing the external appearance of an optical connector according to an embodiment.
FIG. 2 is a sectional view showing an optical fiber cable of the optical connector.
FIG. 3 is a sectional view showing a front portion of the optical connector.
FIG. 4 is a sectional view showing a rear portion of the optical connector.
FIG. 5 is a sectional view showing a peripheral structure of a ferrule member and a pin keeper.
FIG. 6 is a perspective view showing the pin keeper.
FIG. 7A is a side view showing the pin keeper.
FIG. 7B is a plan view showing the pin keeper.
FIG. 7C is another side view showing the pin keeper.
FIG. 8 is an enlarged plan view showing a side plate portion of the pin keeper in FIG. 7B.
FIG. 9 is another perspective view showing the pin keeper.
FIG. 10A is a plan view of the pin keeper of FIG. 7B when viewed from the opposite side.
FIG. 10B is a sectional view of the pin keeper taken along line A1-A1 in FIG. 10A.
FIG. 11A is a perspective view showing an arrangement relationship of a guide pin, the pin keeper, and a spring.
FIG. 11B is another perspective view showing the arrangement relationship of the guide pin, the pin keeper, and the spring.
FIG. 12A is a perspective view showing the front portion of the optical connector.
FIG. 12B is a sectional view of the optical connector taken along line A2-A2 in FIG. 12A.
FIG. 13A is an explanatory view of an operation for pushing and expanding a slit using an extension member.
FIG. 13B is an explanatory view of an operation for pushing and expanding the slit using the extension member.

### Embodiments of the Invention

### [Problems to be Solved by Present Disclosure]

In an optical connector as described above, due to molding constraints or the like, a thickness of a pin keeper itself can become unnecessarily large, and the overall size of the optical connector can be increased by the thickness of the pin keeper. On the other hand, from the viewpoint of suppressing an increase in the overall size of the optical connector, it may be considered to adopt a structure in which, in a female connector that does not require pins, the pin keeper itself is removed from the optical connector. However, because it may be difficult to move the pin keeper freely inside depending on an internal structure of the optical connector, such a structure lacks practicality.

The present disclosure provides an optical connector and a pin keeper that enable the attachment and detachment of a guide pin while achieving size reduction.

### [Advantageous Effects of Present Disclosure]

According to the present disclosure, it is possible to provide an optical connector and a pin keeper that enable the attachment and detachment of a guide pin while achieving size reduction.

### [Description of Embodiments of Present Disclosure]

First, content of embodiments of the present disclosure will be listed and described.
(1) An optical connector of the present disclosure comprises: a ferrule member including a rear end surface, an introduction hole which opens in the rear end surface and into which an optical fiber can be introduced, and a guide hole which opens in the rear end surface and into which a guide pin can be inserted, the ferrule member holding the optical fiber introduced from the introduction hole; a pin keeper which faces the rear end surface and can hold the guide pin protruding from the guide hole; and a housing configured to accommodate the ferrule member and the pin keeper. The pin keeper includes: a metal plate configured to face the rear end surface; and a slit formed to extend from a side edge of the metal plate when viewed in a plate thickness direction of the metal plate. The slit includes a holding portion configured so that the guide pin is inserted and held.
   In the above-described optical connector, the pin keeper has the metal plate and the slit formed to extend from the side edge of the metal plate when viewed in the plate thickness direction of the metal plate. The slit includes the holding portion configured so that the guide pin is inserted and held. In this case, when the slit is pushed and expanded, the holding portion can be expanded in accordance with the deformation of the metal plate and the guide pin can be inserted into the holding hole in this state. Furthermore, in a state in which the guide pin is inserted and held, the guide pin can be pulled out from the holding portion by similarly expanding the holding portion. Thus, in the above-described optical connector, the pin can be attached to and detached from the pin keeper while the pin keeper remains incorporated. As a result, it is possible to easily perform switching between male and female states of the optical connector without work such as disassembly of the optical connector. Furthermore, when a metal plate is used for the pin keeper like the above-described optical connector, for example, unlike when a resin component is used for the pin keeper, because the thickness of the pin keeper becoming thicker than necessary due to molding reasons or the like can be avoided, it is possible to reduce the thickness of the pin keeper as much as possible while ensuring the mechanical strength necessary to hold the guide pin. Thereby, the miniaturization of the overall size of the optical connector is possible.
(2) In the optical connector according to the above-described (1), the metal plate includes: a pair of side plate portions arranged at a pair of positions where the optical fiber is sandwiched when viewed in the plate thickness direction, the pair of side plate portions each having the slit formed therein; and a connection portion including a fiber passage portion configured to allow passage of the optical fiber between the pair of side plate portions and configured to connect the pair of side plate portions. In this case, the pin keeper that holds two guide pins while ensuring a path through which the optical fiber passes can be formed as a single component. In this case, compared with a configuration in which the pin keeper is formed as a separate component for each guide pin, the number of components can be reduced and assembly work can be simplified.
(3) In the optical connector according to the above-described (2), each of the pair of side plate portions may include a side edge portion extending in an alignment direction of the pair of side plate portions. The slit may extend from the side edge portion. An opening end of the slit may be formed on the side edge portion. A pair of openings facing the opening ends of the pair of side plate portions may be formed in the housing. In this case, it is possible to push and expand the slit and extend the holding portion by inserting an extension member from the pair of openings formed in the housing and causing the extension member to abut against the inner surface of the slit of each of the pair of side plate portions. If the open end of the slit is formed on another side edge portion extending in a direction intersecting the above-described side edge portion in the above-described configuration, the side wall of the housing facing another side edge portion easily serves as a part where a guide groove for guiding a latch of another component is formed, and thus such a side wall is easily made relatively thin. In this case, if the opening is formed in the side wall, there is a concern that a defect such as damage may occur at a peripheral part of the opening. In contrast, when the slit is formed in the above-described side edge portion as in the above-described configuration, the occurrence of the above-described defect described above can be avoided.
(4) In the optical connector according to the above-described (3), the connection portion may include: a first connection plate portion configured to connect the pair of side plate portions in the alignment direction; and a second connection plate portion configured to connect the pair of side plate portions in the alignment direction at a position spaced apart from the first connection plate portion. The fiber passage portion may be an opening surrounded by the pair of side plate portions, the first connection plate portion, and the second connection plate portion. In this case, because the pair of side plate portions are firmly supported by the first and second connection plate portions, the deformation of the metal plate can be reduced when the slit is pushed and expanded by the extension member. Thereby, it is possible to perform more reliable insertion and removal of the guide pin into and from the pin keeper.
(5) In the optical connector according to the above-described (4), the slit may include an intermediate portion extending from the opening end of the side edge portion to the holding portion. When viewed in the plate thickness direction, a center of a virtual circle inscribed to an inner surface constituting the holding portion may be shifted to an opposite side of the connection portion in the alignment direction with respect to a center line of the intermediate portion. When the pair of side plate portions are connected by the first and second connection plate portions, the pair of side plate portions easily deform to tilt outward away from each other without tilting inward toward each other if the slit is pushed and expanded by the extension member. According to the above-described configuration, when the center of the virtual circle inscribed to the inner surface constituting the holding portion is shifted from the center line of the intermediate portion of the slit extending from the side edge portion to the holding portion, the guide pin can be more easily pulled out from the holding portion when the slit is pushed and expanded and the pair of side plate portions tilt outward. Thereby, it is possible to perform more reliable insertion and removal of the guide pin into and from the pin keeper.
(6) The optical connector according to any one of the above-described (1) to (5) may further comprise a spring arranged on an opposite side of the rear end surface with the pin keeper sandwiched therebetween. The metal plate may include: a main plate portion configured to face the rear end surface and have the slit formed therein; an auxiliary plate portion arranged on an opposite side of the rear end surface across the main plate portion; and a connection portion configured to connect the main plate portion and the auxiliary plate portion. The auxiliary plate portion may be arranged at a position overlapping the spring when viewed in the plate thickness direction. In this case, the auxiliary plate portion can easily be formed, for example, by bending a part of the metal plate by sheet-metal processing. Furthermore, by arranging such an auxiliary plate portion to overlap the spring, the end portion of the spring can be received by the auxiliary plate portion. In this case, because the structure for receiving the end portion of the spring can be implemented by the part of the metal plate, the need to add another component for receiving the spring end portion is eliminated. Accordingly, according to the above-described configuration, the overall thickness of the pin keeper can be more reliably reduced using a metal plate.
(7) In the optical connector according to the above-described (6), the auxiliary plate portion may have: a front surface facing the main plate portion; and a rear surface facing an opposite side of the front surface. The front surface may include a recess capable of accommodating an end portion of the guide pin. The rear surface may include: a protrusion formed at a position corresponding to the recess; and a support portion configured to surround the protrusion and receive an end portion of the spring. In this way, when the end portion of the guide pin is accommodated in the recess formed in the front surface of the auxiliary plate portion, the interference of the end portion of the guide pin with the auxiliary plate portion can be avoided even if the auxiliary plate portion is located close to the main plate portion. Furthermore, because the protrusion formed at the position corresponding to the recess enters the inner space of the spring, and the spring end portion is supported by the support portion surrounding the protrusion, the spring is prevented from being depressed by the height of the protrusion formed by the recess. Thereby, the overall thickness of the pin keeper can be further reduced, enabling further miniaturization.
(8) The optical connector according to any one of the above-described (1) to (7) may further comprise a fusion splice protection sleeve arranged on an opposite side of the rear end surface with the pin keeper sandwiched therebetween and configured to protect a fusion splice portion between a first optical fiber that is the optical fiber arranged configured to extend from the introduction hole and a second optical fiber that is fusion-spliced to the first optical fiber, the fusion splice protection sleeve being accommodated in the housing together with the ferrule member and the pin keeper. When the optical connector includes the fusion splice protection sleeve, the fusion splice protection sleeve remains fixed in a hardened state at a position facing the pin keeper, making it difficult to freely move the pin keeper between the ferrule member and the fusion splice protection sleeve. Even with such a structure, in the above-described optical connector, the guide pin can be attached to and detached from the pin keeper while the pin keeper remains incorporated, thereby achieving the above-described effects more effectively.
(9) A pin keeper of the present disclosure is a pin keeper for holding a guide pin protruding from a ferrule member of an optical connector. The pin keeper comprises: a metal plate; and a slit formed to extend from a side edge of the metal plate when viewed in a plate thickness direction of the metal plate. The slit includes a holding portion configured so that the guide pin is inserted and held. According to this pin keeper, it is possible to easily attach and detach a guide pin to and from the pin keeper while achieving size reduction as described above.

### [Details of Embodiments of Present Disclosure]

Specific examples of an optical connector and a pin keeper according to the present disclosure will be described below with reference to the drawings. The present disclosure is not limited to these examples, but is defined by the scope of the claims, and is intended to include all modifications within the meaning and scope equivalent to the claims. In the following description, identical reference signs denote identical elements in the drawings, and redundant descriptions will be omitted as appropriate. In the following description, the term "front" refers to a direction from the optical connector toward another optical connector serving as a connection target. The term "rear" refers to an opposite direction.

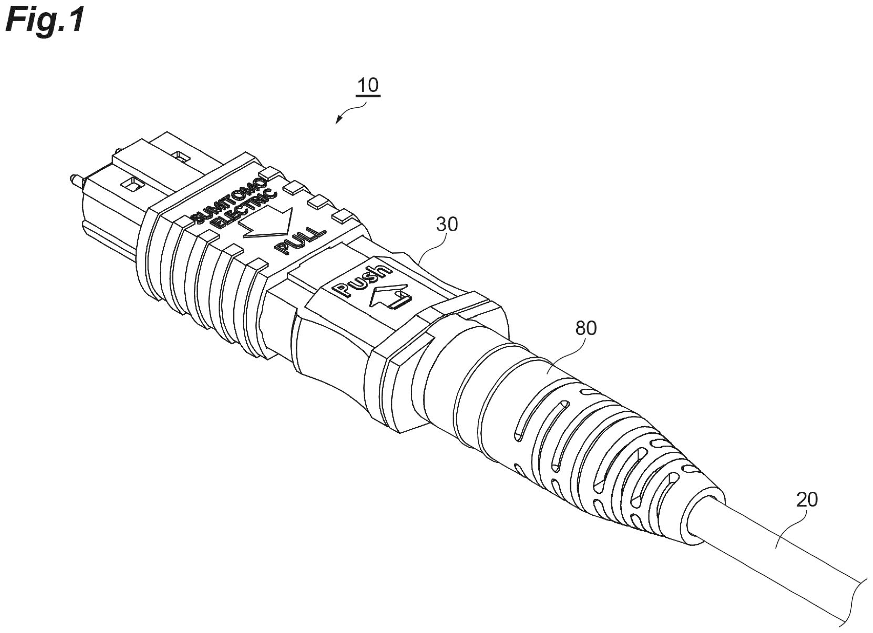

FIG. 1 is a perspective view showing the external appearance of an optical connector 10 according to the present embodiment. The optical connector 10 is connected to another optical connector that is a connection target by being inserted into an adapter. As shown in FIG. 1, the optical connector 10 includes, for example, an optical fiber cable 20, a housing 30, and a boot 80.

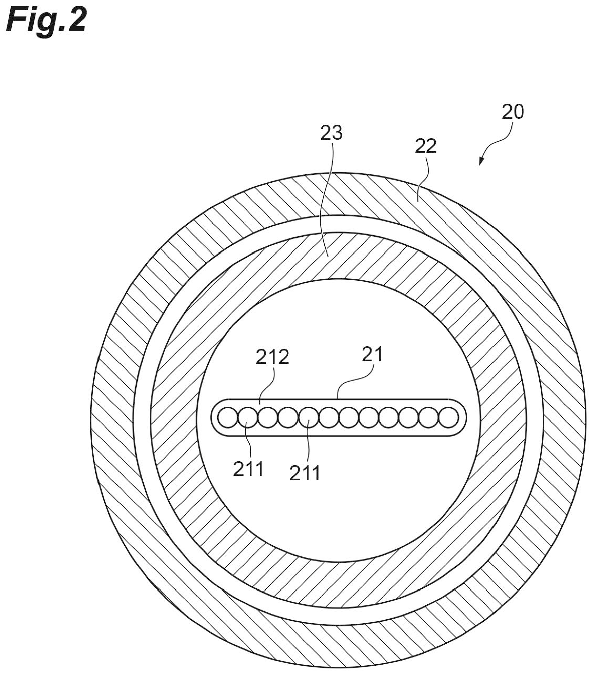

FIG. 2 is a view showing a cross-section perpendicular to a central axis of the optical fiber cable 20. As shown in FIG. 2, the optical fiber cable 20 includes, for example, an optical fiber tape core 21, a sheath (outer sheath) 22, and a tension member 23. The optical fiber tape core 21 includes, for example, a plurality (twelve in an example) of optical fibers 211 (second optical fibers), and a resin coating 212 configured to collectively cover the plurality of optical fibers 211. The plurality of optical fibers 211 are aligned in an array along a direction perpendicular to the central axis of the optical fiber cable 20. The sheath 22 is a resin layer surrounding the optical fiber tape core 21. The sheath 22 has, for example, a cylindrical shape. The sheath 22 accommodates the optical fiber tape core 21 inside. The tension member 23 is, for example, a fibrous member arranged between the optical fiber tape core 21 and the sheath 22. When a pulling force is applied to the optical fiber cable 20, the tension member 23 resists the force, thereby preventing the optical fiber 211 from breaking.

FIG. 1 is referred to again. The housing 30 is a housing that accommodates the front end portion of the optical fiber cable 20. The housing 30 is formed, for example, of a resin material. The housing 30 has, for example, a hollow cylindrical shape.

The boot 80 is, for example, cylindrical and gradually decreases in an outer diameter toward the rear end. The boot 80 is attached to the rear end portion of the housing 30. The boot 80 surrounds and protects a part of the optical fiber cable 20 extending from the housing 30. The boot 80 is formed, for example, of a flexible resin material.

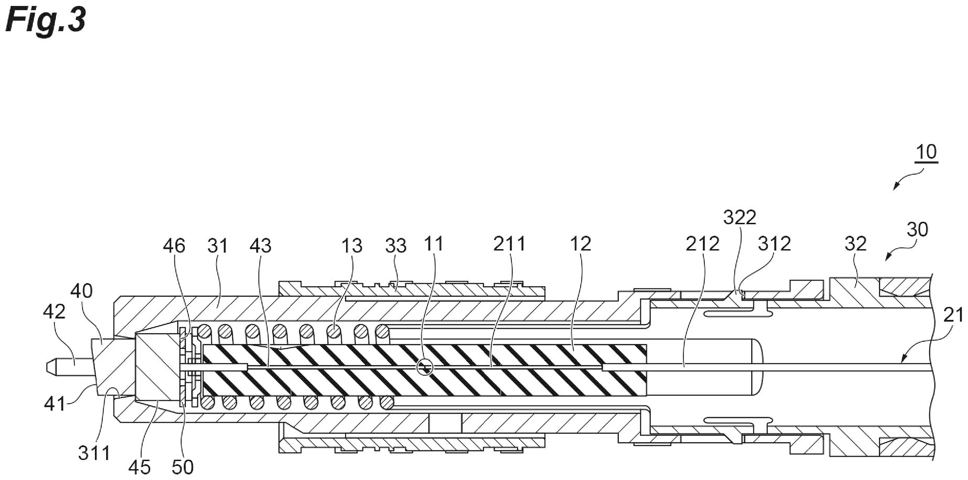

FIG. 3 is a sectional view of a front portion of the optical connector 10 and shows a side cross-section taken along the central axis of the optical fiber tape core 21. As shown in FIG. 3, the housing 30 includes, for example, a front housing 31, a rear housing 32, and an outer housing 33. Each of the front housing 31, the rear housing 32, and the outer housing 33 has, for example, a hollow cylindrical shape. The front housing 31 is arranged in front of the rear housing 32. The front housing 31 is accommodated within the outer housing 33. The outer housing 33 is mounted to be movable in a front-rear direction on the outer side of the front housing 31.

In the front housing 31, an engagement hole 312 with which a latch 322 of the rear housing 32 engages is formed. When the latch 322 is fitted into the engagement hole 312, the rear housing 32 is connected to the front housing 31 in the front-rear direction. An inner space formed by the front housing 31 and the rear housing 32 accommodates the optical fiber tape core 21 that extends forward from the distal end of the optical fiber cable 20. The resin coating 212 is removed at the distal end portion of the optical fiber tape core 21, such that a plurality of optical fibers 211 are exposed from the resin coating 212.

As shown in FIG. 3, the optical connector 10 further includes, for example, a fusion splice protection sleeve 12, a compression coil spring 13 (spring), a ferrule member 40, and a pin keeper 50.

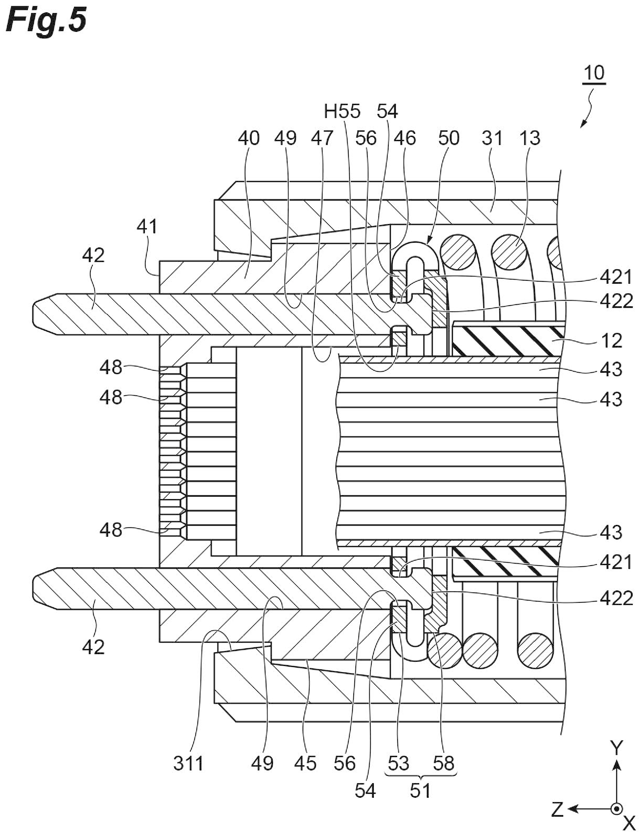

The ferrule member 40 is provided on the front end portion of the optical connector 10. A front end surface 41 of the ferrule member 40 abuts against a ferrule member of another optical connector that is the connection target of the optical connector 10. Guide pins 42 for positioning with the ferrule member of the other optical connector protrude from the front end surface 41. The guide pin 42 is inserted into a guide hole 49 (see FIG. 5) penetrating from the front end surface 41 to a rear end surface 46. The ferrule member 40 is made of, for example, a resin material. A material of the ferrule member 40 may be, for example, an engineering plastic such as polyphenylene sulfide (PPS).

The ferrule member 40 protrudes forward from an opening 311 formed on the front end surface of the front housing 31. The ferrule member 40 includes a plurality of fiber holes 48 (see FIG. 5) for inserting a plurality of built-in fibers 43 (first optical fibers). The ferrule member 40 holds the built-in fibers 43 by accommodating distal end portions of the built-in fibers 43 in the fiber holes 48. The number of built-in fibers 43 is the same as the number of optical fibers 211. The plurality of built-in fibers 43 are aligned in an array along a direction identical to an alignment direction of the plurality of optical fibers 211. The first end surfaces of the plurality of built-in fibers 43 are exposed at the front end surface 41 of the ferrule member 40 and abut against the end surfaces of a plurality of optical fibers held in the ferrule member of the other optical connector. Thereby, each of the plurality of built-in fibers 43 is optically coupled with one of a plurality of optical fibers of the other optical connector.

The pin keeper 50 is made of a metal material. The pin keeper 50 is formed, for example, by performing sheet-metal processing and bending of a metal plate. The pin keeper 50 is arranged to face the rear end surface 46 of the ferrule member 40 and holds the proximal end portions of the guide pins 42 inserted into the ferrule member 40.

A plurality of built-in fibers 43 extend rearward from the rear end surface 46 of the ferrule member 40 through an opening H55 (see FIG. 5) formed in the pin keeper 50. The second end surfaces of the plurality of built-in fibers 43 are fusion-spliced to the end surfaces of the plurality of optical fibers 211. Accordingly, fusion splice portions 11 are formed between the built-in fibers 43 and the optical fibers 211. The fusion splice protection sleeve 12 protects the fusion splice portions 11, the exposed portions of the optical fibers 211 exposed from the resin coating 212, and the built-in fibers 43. The fusion splice protection sleeve 12 has, for example, a tubular shape. The fusion splice protection sleeve 12 is, for example, made of a heat-shrinkable resin.

A compression coil spring 13 is fitted over the fusion splice protection sleeve 12 to surround the periphery of the fusion splice protection sleeve 12. A first end of the compression coil spring 13 abuts against the pin keeper 50. A second end of the compression coil spring 13 abuts against a part of the housing 30. The compression coil spring 13 biases the ferrule member 40 forward via the pin keeper 50. When the ferrule member 40 abuts against the ferrule of another optical connector, the ferrule member 40 comes into contact with the ferrule of another optical connector with an appropriate pressing force as the compression coil spring 13 contracts. When the ferrule member 40 does not come into contact with the ferrule member of another optical connector, a flange portion 45 provided on a rear portion of the ferrule member 40 abuts against a portion around the opening 311 of the front housing 31 to receive a biasing force of the compression coil spring 13.

The front housing 31 accommodates a part of the ferrule member 40, the built-in fibers 43, the pin keeper 50, the exposed portions of the optical fibers 211 exposed from the resin coating 212, the fusion splice protection sleeve 12, and the compression coil spring 13.

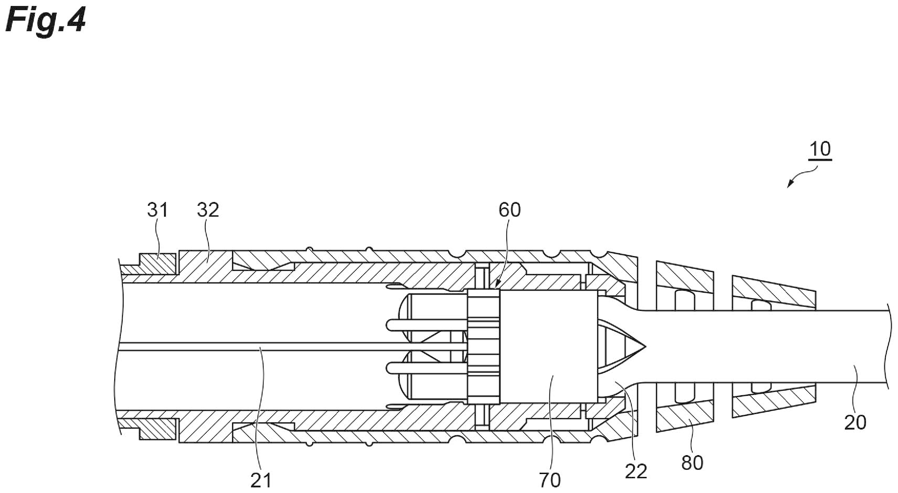

FIG. 4 is a view showing a structure of a rear portion of the optical connector 10. As shown in FIG. 4, the optical connector 10 further includes an approximately cylindrical crimp seat 60 and an annular ring 70. The crimp seat 60 and the ring 70 are provided at a position near a rear end portion inside the rear housing 32. The crimp seat 60 and the ring 70 are provided for pinching and fixing the distal end portions of the sheath 22 and the tension member 23 peeled off from the optical fiber tape core 21. For this purpose, the ring 70 is arranged around the crimp seat 60 and fitted to the crimp seat 60 in a state in which the distal end portions of the sheath 22 and the tension member 23 are sandwiched between the crimp seat 60 and the ring 70. In FIG. 4, the tension member 23 is omitted for clarity. The crimp seat 60 and the ring 70 are made of, for example, a metal material or a resin material.

In the optical connector 10 described above, a transmission rate exceeds 10 Gbps and a transmission rate of 40 Gbps or 100 Gbps is implemented due to the increasing demand for communication, and it is desirable to upgrade from 10 Gbps to 40 Gbps or 100 Gbps. Here, in the optical connector 10, a state in which the guide pins 42 protrude from the front end surface 41 of the ferrule member 40 is referred to as a male state, while a state in which the guide holes 49 are exposed at the front end surface 41 is referred to as a female state. In accordance with the above-described upgrade, it may be necessary to switch between male and female states.

The optical connector 10 according to the present embodiment is capable of switching between a state in which the guide pins 42 protrude from the rear end surface 46 and a state in which the guide holes 49 are exposed at the rear end surface 46. The optical connector 10 can freely switch between male and female states without disassembling the optical connector 10 or detaching it from the optical fiber cable 20. This switching is achieved by performing the insertion and removal of the guide pins 42 into and from the ferrule member 40 and the pin keeper 50. The ferrule member 40, the pin keeper 50, and their surrounding structure will be described in more detail below.

FIG. 5 is a sectional view showing a structure around the ferrule member 40 and the pin keeper 50 and shows a side cross-section along the central axis of the optical fiber tape core 21. For convenience, the distal end portions of the built-in fibers 43 are omitted in FIG. 5. Hereinafter, a plate thickness direction of the metal plate 51 constituting the pin keeper 50 is defined as the Z-axis direction. An alignment direction of holding portions 56 and 56 intersecting the Z-axis direction is defined as the Y-axis direction. A direction intersecting both the Y-axis and the Z-axis directions is defined as the X-axis direction. The Z-axis direction coincides with a connection direction between the optical connector 10 and another optical connector that is the connection target. As shown in FIG. 5, the ferrule member 40 includes, for example, an introduction hole 47, a plurality of fiber holes 48, and a pair of guide holes 49 and 49.

The introduction hole 47 extends forward along the Z-axis direction from the rear end surface 46. The introduction hole 47 opens in the rear end surface 46 to collectively receive the built-in fibers 43. The plurality of fiber holes 48 open in the front end surface 41, extend from the front end surface 41 along the Z-axis direction, and are aligned along the Y-axis direction. Inside the ferrule member 40, the fiber holes 48 are connected to the introduction hole 47. The plurality of built-in fibers 43 introduced into the introduction hole 47 from the rear end surface 46 are inserted into and held in the plurality of fiber holes 48.

The guide holes 49 and 49 sandwich the introduction hole 47 and are arranged on both sides in the Y-axis direction and penetrate the ferrule member 40 in the Z-axis direction from the front end surface 41 to the rear end surface 46. The guide holes 49 and 49 open in the rear end surface 46 and a pair of guide pins 42 and 42 are inserted into the guide holes 49 and 49. A groove extending in a circumferential direction is formed on an outer circumferential surface of the proximal end portion of the guide pin 42. A part where the groove of the guide pin 42 is formed has a smaller outer diameter than other parts of the guide pin 42 and is configured as an insertion portion 421 inserted into and held by the pin keeper 50. The guide holes 49 and 49 and the guide pins 42 and 42 function as positioning portions for positioning the optical connector 10 and another optical connector of the connection target.

The pin keeper 50 is accommodated within the front housing 31 together with the ferrule member 40 and faces the rear end surface 46 of the ferrule member 40. The fusion splice protection sleeve 12 is arranged on an opposite side of the rear end surface 46 with the pin keeper 50 sandwiched therebetween. Accordingly, within the front housing 31, the pin keeper 50 is arranged in the Z-axis direction between the rear end surface 46 and the fusion splice protection sleeve 12. The pin keeper 50 is sandwiched in the Z-axis direction between the rear end surface 46 and the compression coil spring 13 extrapolated to the fusion splice protection sleeve 12.

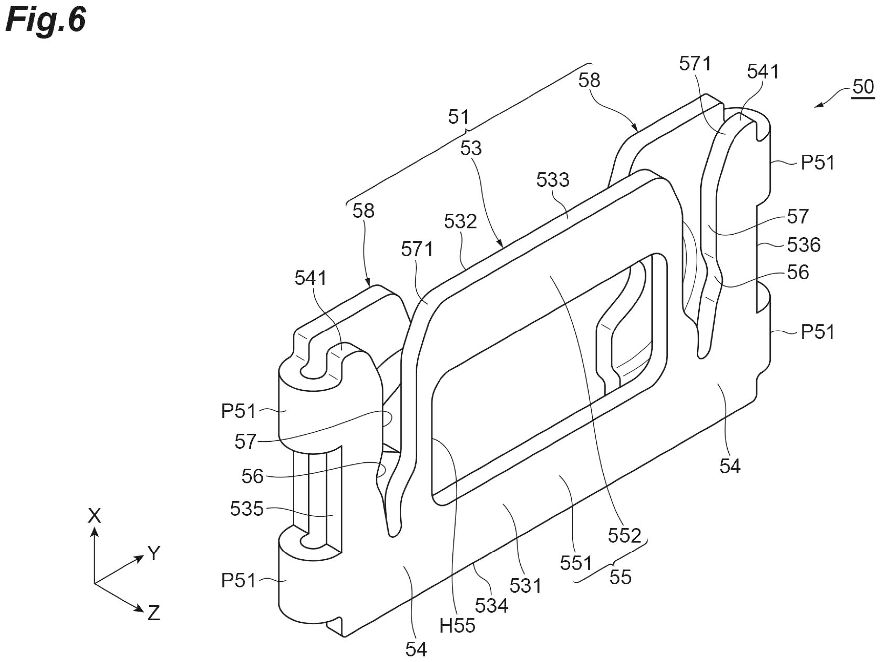

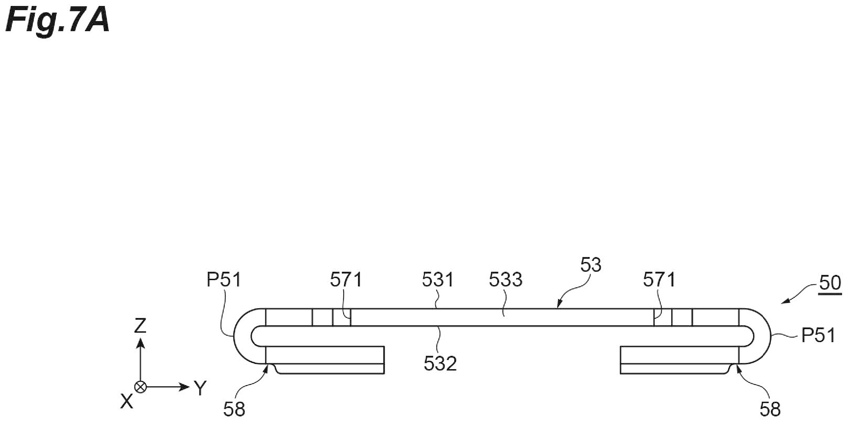

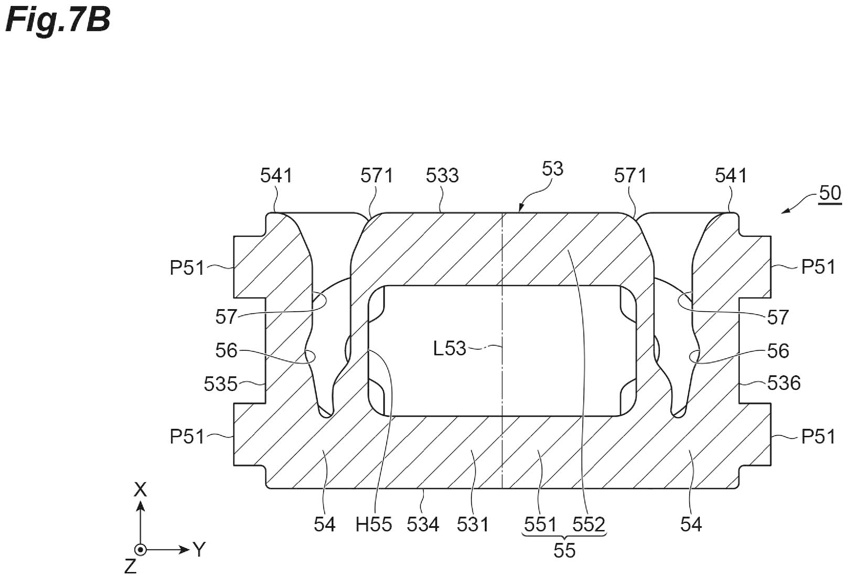

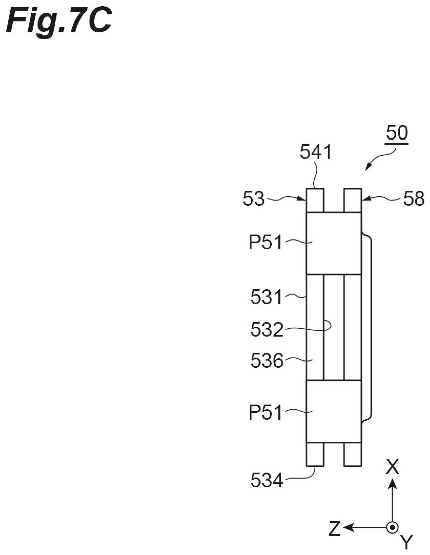

FIG. 6 is a perspective view showing the pin keeper 50. FIG. 7A is a side view showing the pin keeper 50. FIG. 7B is a plan view showing the pin keeper 50. FIG. 7C is another side view showing the pin keeper 50.

According to the present embodiment, the pin keeper 50 is, for example, a member formed by applying sheet-metal processing to the metal plate 51. That is, the pin keeper 50 has a structure in which a part of the metal plate 51 is bent. The metal plate 51 is, for example, a plate-shaped member made of a metal material such as mild steel, surface-treated steel, stainless steel, aluminum alloy, or copper alloy. A thickness of the metal plate 51 is, for example, between 0.25 mm and 1 mm. The metal plate 51 includes, for example, a main plate portion 53 and a pair of auxiliary plate portions 58 and 58.

As shown in FIG. 6, the main plate portion 53 has, for example, a flat plate shape extending along the X- and Y-axis directions. When viewed in the Z-axis direction, the main plate portion 53 has, for example, a rectangular shape whose longitudinal direction is the Y-axis direction and whose transverse direction is the X-axis direction. In a state in which the pin keeper 50 is incorporated into the optical connector 10, the main plate portion 53 is arranged to face the rear end surface 46 of the ferrule member 40 in the Z-axis direction (see FIG. 5). The main plate portion 53 includes, for example, a front surface 531 facing the rear end surface 46 in the Z-axis direction, a rear surface 532 located on the opposite side of the front surface 531 in the Z-axis direction, and four side edges 533, 534, 535, and 536 connecting the front surface 531 and the rear surface 532. In FIG. 7B, for ease of understanding, a part showing the front surface 531 is hatched.

The front surface 531 and the rear surface 532 are, for example, flat surfaces along the X- and Y-axis directions and are aligned along the Z-axis direction. The side edges 533 and 534 are, for example, side surfaces extending along the Y-axis direction at both ends of the main plate portion 53 in the X-axis direction. The side edges 535 and 536 are, for example, side surfaces extending along the X-axis direction at both ends of the main plate portion 53 in the Y-axis direction.

As shown in FIGS. 6 and 7B, the main plate portion 53 includes, for example, a pair of side plate portions 54 and a connection portion 55. Each of the side plate portions 54 and 54 has, for example, a rectangular plate shape whose longitudinal direction is the X-axis direction and whose transverse direction is the Y-axis direction. The side plate portions 54 and 54 are arranged at intervals along the Y-axis direction. In the state in which the pin keeper 50 is incorporated into the optical connector 10, the side plate portions 54 and 54 are arranged at a pair of positions where the plurality of built-in fibers 43 extending from the rear end surface 46 are sandwiched when viewed along the Z-axis direction (see FIG. 5). The connection portion 55 connects the side plate portions 54 and 54 in the Y-axis direction. The connection portion 55 includes, for example, a first connection plate portion 551 and a second connection plate portion 552.

Each of the first connection plate portion 551 and the second connection plate portion 552 has, for example, a rectangular shape whose longitudinal direction is the Y-axis direction and whose transverse direction is the X-axis direction, when viewed in the Z-axis direction. The first connection plate portion 551 connects the upper end portions of the side plate portions 54 and 54 in the Y-axis direction. The upper end portion of the side plate portion 54 is the first end portion of the side plate portion 54 in the X-axis direction. The second connection plate portion 552 is arranged at a position spaced apart from the first connection plate portion 551 in the X-axis direction. The second connection plate portion 552, for example, connects the lower end portions of the side plate portions 54 and 54 in the Y-axis direction, when viewed in the Z-axis direction. The lower end portion of the side plate portion 54 is a second end portion of the side plate portion 54 in the X-axis direction.

A space surrounded by the side plate portions 54 and 54, the first connection plate portion 551, and the second connection plate portion 552 is the opening H55 (fiber passage portion) through which a plurality of built-in fibers 43 (see FIG. 5) pass. The opening H55 is a through-hole that penetrates the connection portion 55 in the Z-axis direction. When viewed in the Z-axis direction, the opening H55 has, for example, a rectangular shape whose longitudinal direction is the Y-axis direction and whose transverse direction is the X-axis direction.

As shown in FIGS. 6 and 7B, a slit 57 including the holding portion 56 is formed in each of the side plate portions 54 and 54. Slits 57 and 57 are formed at positions on both sides in the Y-axis direction with the opening H55 sandwiched therebetween. Each slit 57 extends along the X-axis direction from a side edge portion 541 of the side plate portion 54. The side edge portion 541 is a portion of the side edge 533 of the main plate portion 53 that is included in the side plate portion 54. An opening end 571 of the slit 57 is formed in the side edge portion 541. The holding portion 56 is, for example, formed at an intermediate position in the slit 57. The holding portion 56 is positioned, for example, at a central portion of the side plate portion 54 when viewed in the Z-axis direction.

As shown in FIG. 7B, the side plate portions 54 and 54 have shapes that are line-symmetric with respect to a center line L53 of the main plate portion 53. The center line L53 of the main plate portion 53 is a line that passes through the center of the main plate portion 53 in the Y-axis direction when viewed in the Z-axis direction. Because the side plate portions 54 and 54 have symmetrical configurations with respect to each other, one side plate portion 54 will be described in further detail and a detailed description of the other side plate portion 54 will be omitted. Hereinafter, a direction close to the center line L53 in the Y-axis direction may be referred to as an inner side, and a direction away from the center line L53 in the Y-axis direction may be referred to as an outer side.

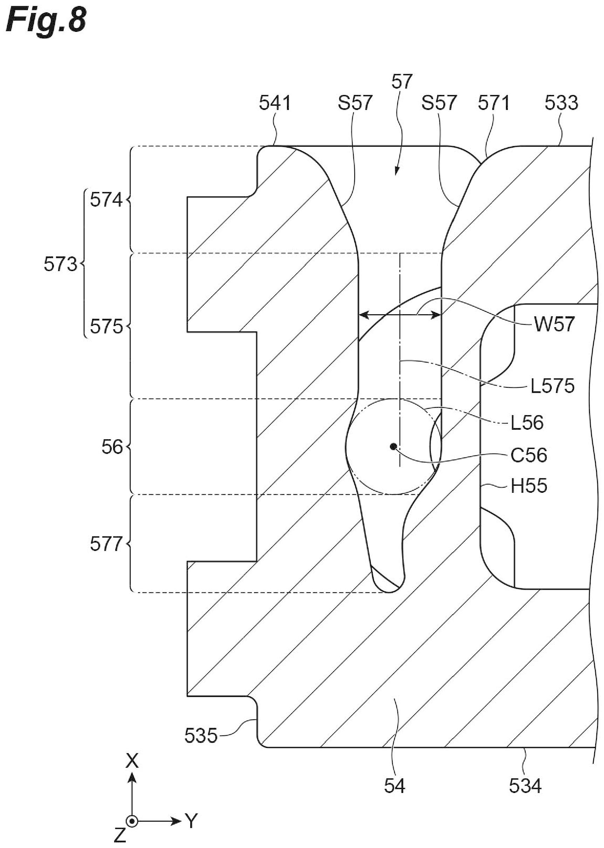

FIG. 8 is an enlarged plan view of the side plate portion 54 of FIG. 7B. In FIG. 8, a virtual circle L56 inscribed to inner surfaces S57 and S57 constituting the holding portion 56 is indicated by a two-dot chain line. The holding portion 56 is configured so that the guide pin 42 is inserted and held. The diameter of the virtual circle L56 indicating the holding portion 56 is larger than the outer diameter of the insertion portion 421 (see FIG. 5) of the guide pin 42 and smaller than the outer diameter of another part of the guide pin 42 excluding the insertion portion 421. Thus, in a state in which the insertion portion 421 of the guide pin 42 is inserted into the holding portion 56, the detachment of the guide pin 42 from the holding portion 56 is prevented. A center C56 of the virtual circle L56 corresponds to the center of the holding portion 56.

The slit 57, for example, extends along the X-axis direction from the side edge portion 541 to a position beyond the holding portion 56. The slit 57 is defined as a space sandwiched between a pair of inner surfaces S57 and S57 facing each other in the Y-axis direction. A distance between the inner surfaces S57 and S57 in the Y-axis direction, i.e., a width W57 of the slit 57 in the Y-axis direction, varies, for example, with a position of the slit 57 in the X-axis direction. The width W57 of the slit 57 may be uniform at each position along the X-axis direction of the slit 57.

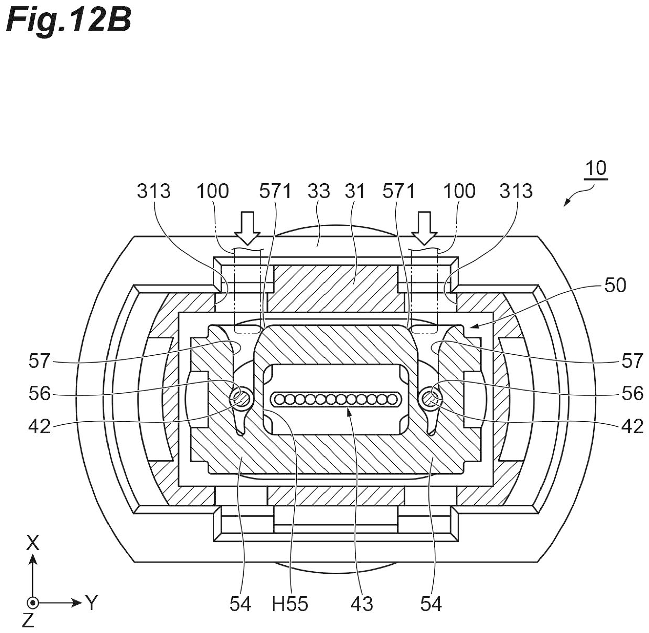

The slit 57 includes, for example, an intermediate portion 573 extending along the X-axis direction from the opening end 571 to the holding portion 56, and a distal end portion 577 extending further along the X-axis direction from the holding portion 56. The intermediate portion 573 includes, for example, a tapered portion 574 and a straight portion 575. The tapered portion 574 is a portion in which the width W57 of the slit 57 increases toward the opening end 571 in the X-axis direction. The tapered portion 574 is formed to guide an extension member 100 (see FIG. 12B) to be described below to the straight portion 575 when the extension member 100 is inserted into the slit 57 from the opening end 571. The straight portion 575 is a portion in which the width W57 of the slit 57 is uniform at each position along the X-axis direction. The width W57 of the slit 57 in the straight portion 575 is larger than the outer diameter of the insertion portion 421 (see FIG. 5) of the guide pin 42 and smaller than the outer diameter of another portion of the guide pin 42 excluding the insertion portion 421. Thus, in a state in which the insertion portion 421 of the guide pin 42 is inserted into the holding portion 56, the detachment of the guide pin 42 from the straight portion 575 is prevented.

A center line L575 of the straight portion 575 when viewed in the Z-axis direction extends along the X-axis direction. The center line L575 of the straight portion 575 is a line passing through the centers of the inner surfaces S57 and S57 constituting the straight portion 575 when viewed in the Z-axis direction. The center C56 of the virtual circle L56 is shifted to the outer side in the Y-axis direction (i.e., the opposite side of the connection portion 55 in the Y-axis direction) with respect to the center line L575 of the straight portion 575. As a result, the inner-side inner surface S57 of the straight portion 575 is smoothly connected to the inner surface S57 of the holding portion 56 without forming a recess. On the other hand, the outer-side inner surface S57 of the straight portion 575 forms a recess with respect to the inner surface S57 of the holding portion 56.

The distal end portion 577 is a portion having the width W57 narrower than that of the straight portion 575. The distal end portion 577 is formed so that the slit 57 can be easily pushed and expanded when the extension member 100 (see FIG. 12B) is inserted into the slit 57. When the slit 57 is easily expanded in this way, the holding portion 56 also becomes easily expanded. Therefore, the formation of the distal end portion 577 facilitates the extension of the holding portion 56.

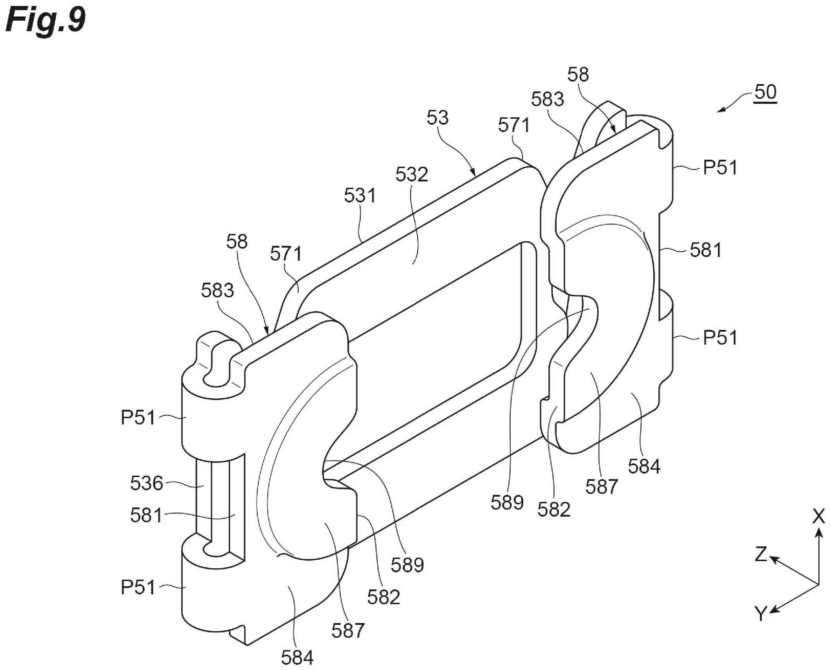

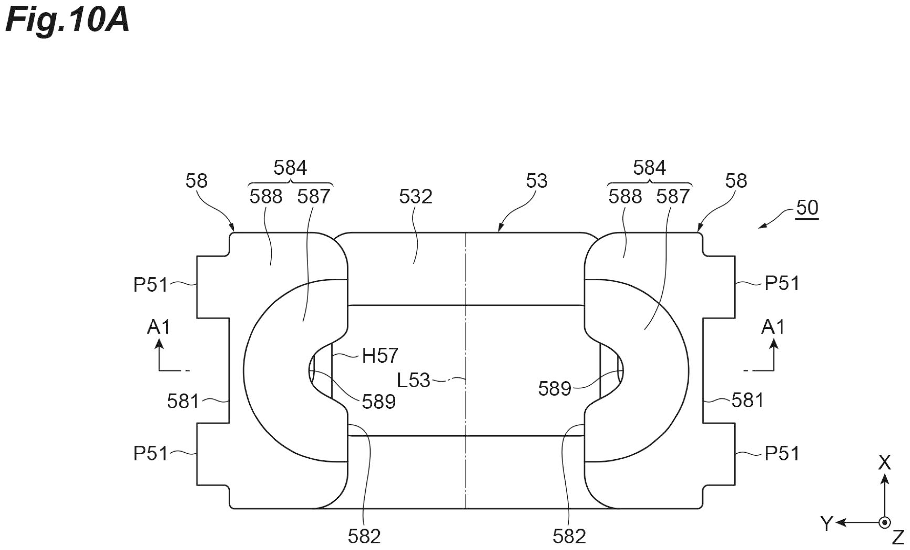

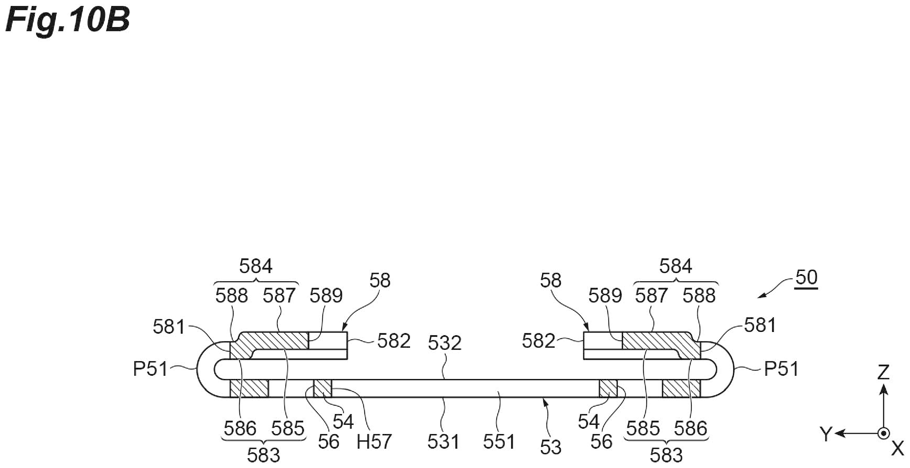

FIG. 9 is another perspective view showing the pin keeper 50. FIG. 10A is a plan view of the pin keeper 50 of FIG. 7B when viewed from the opposite side. FIG. 10B is a sectional view of the pin keeper 50 taken along line A1-A1 in FIG. 10A. The auxiliary plate portions 58 and 58 are plate-shaped members formed by bending both end portions of the metal plate 51 in the Y-axis direction by 180 degrees toward the rear surface 532 side. In a state in which the pin keeper 50 is incorporated into the optical connector 10, the auxiliary plate portions 58 and 58 are arranged on the opposite side of the rear end surface 46 with respect to the main plate portion 53 in the Z-axis direction (see FIG. 5). The auxiliary plate portions 58 and 58 are, for example, arranged to face the rear surface 532 of the main plate portion 53 with a space therebetween in the Z-axis direction. The auxiliary plate portions 58 and 58 are, for example, arranged parallel to the main plate portion 53.

As shown in FIG. 10A, the auxiliary plate portions 58 and 58 have shapes that are line-symmetric with respect to the center line L53 of the main plate portion 53 Because the auxiliary plate portions 58 and 58 have symmetrical configurations with respect to each other, one auxiliary plate portion 58 will be described in further detail and a detailed description of the other auxiliary plate portion 58 will be omitted.

The auxiliary plate portion 58 includes a proximal end 581 connected to the side edge 536 of the main plate portion 53 via a connection portion P51, and a distal end 582 (free end) not connected to the main plate portion 53. The connection portion P51 is a bent portion configured to connect the side edge 536 of the main plate portion 53 and the proximal end 581 of the auxiliary plate portion 58. The auxiliary plate portion 58 is formed to be bent at the connection portion P51 with respect to the main plate portion 53. A recess 589 recessed in the Y-axis direction from the distal end 582 is formed at the central portion of the distal end 582 in the X-axis direction. The recess 589 has, for example, a semicircular shape when viewed in the Z-axis direction. The recess 589 is formed to avoid the interference of the plurality of built-in fibers 43 passing through the opening H55 with the auxiliary plate portions 58 and 58. Accordingly, the plurality of built-in fibers 43 that have passed through the opening H55 extend rearward without interfering with the auxiliary plate portions 58 and 58.

As shown in FIG. 10B, the auxiliary plate portion 58 is arranged at a position facing the holding portion 56 of the side plate portion 54 in the Z-axis direction. In other words, the auxiliary plate portion 58 faces the rear surface 532 of the side plate portion 54 in the Z-axis direction so that the auxiliary plate portion 58 overlaps he holding portion 56 in the Z-axis direction. Accordingly, the auxiliary plate portion 58 covers the holding portion 56 when viewed in the Z-axis direction. The auxiliary plate portion 58 has, for example, a rectangular plate shape whose longitudinal direction is the X-axis direction and whose transverse direction is the Y-axis direction, in correspondence with the side plate portion 54. The auxiliary plate portion 58 includes a front surface 583 facing the rear surface 532 of the side plate portion 54 in the Z-axis direction and a rear surface 584 facing an opposite side of the front surface 583 in the Z-axis direction.

A recess 585 recessed in the Z-axis direction is formed in the front surface 583 of the auxiliary plate portion 58. The recess 585 extends annularly to surround a recess 589 formed at the distal end 582 of the auxiliary plate portion 58 when viewed in the Z-axis direction (see FIG. 10A). The recess 585 functions as a guide pin accommodating portion for accommodating the proximal end 422 of the guide pin 42 (see FIG. 5). The portion of the front surface 583 excluding the recess 585 is a flat portion 586 that relatively protrudes to the protrusion. The flat portion 586 is, for example, a flat surface extending along the X- and Y-axis directions, and surrounds the recess 585.

In the rear surface 584 of the auxiliary plate portion 58, a protrusion 587 protruding in the Z-axis direction is formed at a position corresponding to the recess 585 of the front surface 583. Like the recess 585, the protrusion 587 extends annularly to surround the recess 585 formed at the distal end 582 of the auxiliary plate portion 58 when viewed in the Z-axis direction (see FIG. 10A). A portion of the rear surface 584 excluding the protrusion 587 is a flat portion 588 (support portion) that is relatively recessed with respect to the protrusion 587. The flat portion 588 is, for example, a flat surface extending along the X- and the Y-axis directions and surrounds the protrusion 587. The flat portion 588 functions as a support portion that supports a first end of the compression coil spring 13.

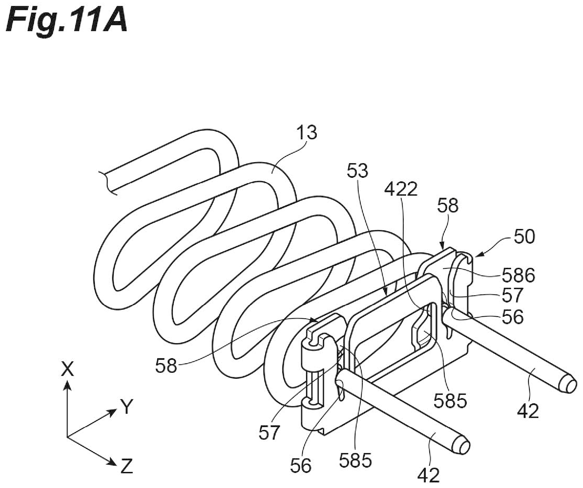

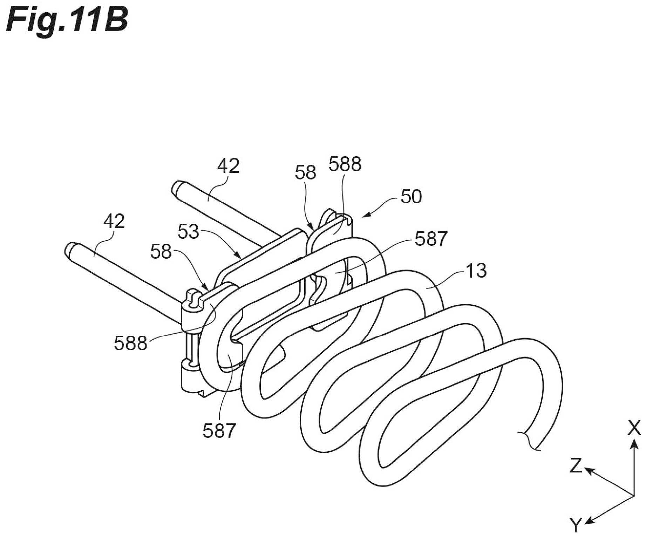

FIG. 11A is a perspective view showing an arrangement relationship of the guide pins 42 and 42, the pin keeper 50, and the compression coil spring 13. FIG. 11B is another perspective view showing an arrangement relationship of the guide pins 42 and 42, the pin keeper 50, and the compression coil spring 13. As shown in FIGS. 11A and 11B, in a state in which the guide pins 42 and 42 are inserted into and held by the holding portions 56 and 56, the proximal ends 422 and 422 of the guide pins 42 and 42 are accommodated in the recesses 585 and 585 of the auxiliary plate portions 58 and 58 of the pin keeper 50. The proximal ends 422 and 422 may abut against the recesses 585 and 585 in the Z-axis direction or may be spaced apart from the recesses 585 and 585. The first end of the compression coil spring 13 abuts against the flat portions 588 and 588 of the auxiliary plate portions 58 and 58 in the Z-axis direction. The first end of the compression coil spring 13 abuts against the flat portions 588 and 588 in the Z-axis direction, such that the ferrule member 40 is biased forward via the pin keeper 50.

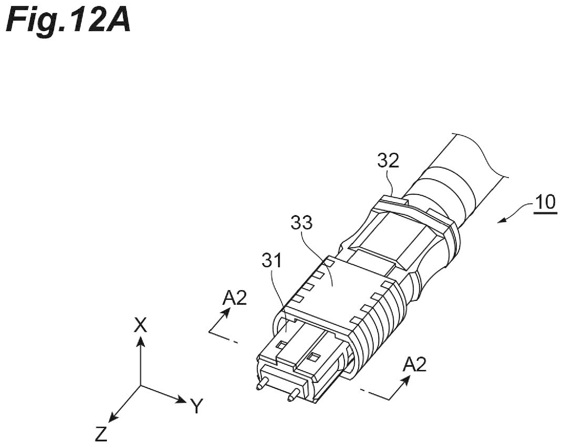

FIG. 12A is a perspective view showing the front portion of the optical connector 10. FIG. 12B is a sectional view of the optical connector 10 taken along line A2-A2 in FIG. 12A. As shown in FIG. 12A, a pair of openings 313 and 313 are formed in the front housing 31 for inserting an extension member 100 therein. The openings 313 and 313 are formed at positions facing the opening ends 571 and 571 of the slits 57 and 57 formed in the side plate portions 54 and 54 of the pin keeper 50 in the X-axis direction. In other words, the openings 313 and 313 are formed at positions overlapping the opening ends 571 and 571 in the X-axis direction. As shown in FIG. 12B, the extension member 100 can be inserted into the front housing 31 from the openings 313 and 313.

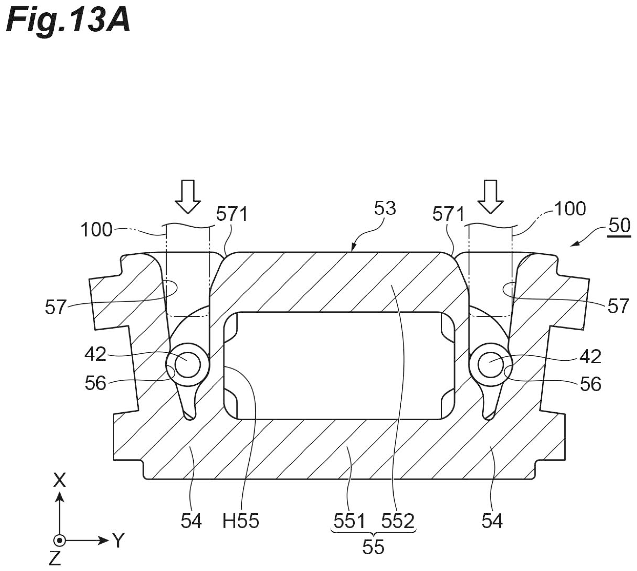

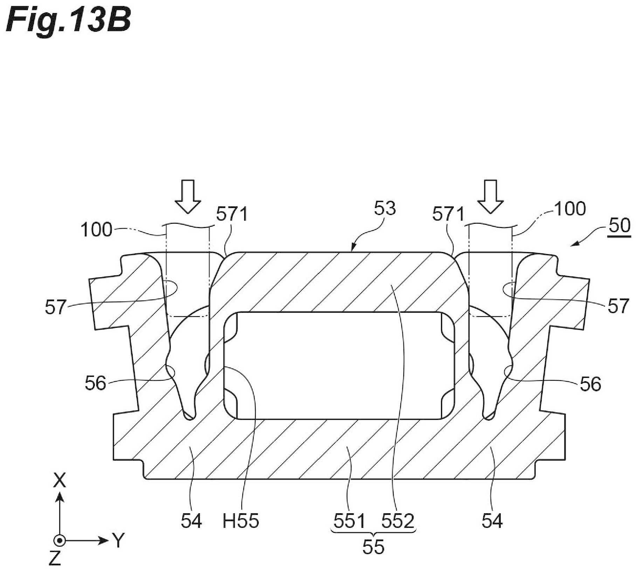

FIGS. 13A and 13B are explanatory views of an operation for pushing and expanding the slits 57 and 57 using the extension member 100. In FIGS. 13A and 13B, for ease of understanding, a portion showing the front surface 531 of the pin keeper 50 is hatched. As shown in FIG. 13A, when the holding portions 56 and 56 are extended using the extension member 100, the extension member 100 is inserted in the X-axis direction from the openings 313 and 313 toward the slits 57 and 57. Subsequently, when the extension member 100 abuts against the inner surfaces S57 and S57 of the slits 57 and 57, the slits 57 and 57 are pushed and expanded. At this time, the side plate portions 54 and 54, which are supported by the first connection plate portion 551 and the second connection plate portion 552, deform to bend outward in the Y-axis direction without bending inward in the Y-axis direction.

If the side plate portions 54 and 54 deform to bend outward in the Y-axis direction, the holding portions 56 and 56 also deform to expand outward in the Y-axis direction. By expanding the holding portions 56 and 56 in this way, as shown in FIG. 13B, the guide pins 42 and 42, which have been held by the holding portions 56 and 56, can be pulled out therefrom. When the guide pins 42 and 42 are inserted into the holding portions 56 and 56, the guide pins 42 and 42 can be inserted into the holding portions 56 and 56 in a state in which the holding portions 56 and 56 are expanded using the extension member 100 as described above. Thus, the slits 57 and 57 are expanded, such that the guide pins 42 and 42 can be inserted into and removed from the holding portions 56 and 56. That is, the guide pins 42 and 42 can be attached to and detached from the pin keeper 50.

The effects of the optical connector 10 and the pin keeper 50 of the present embodiment described above will now be described In the present embodiment, the pin keeper 50 includes the metal plate 51 and the slit 57 extending from the side edge 533 of the metal plate 51. The slit 57 includes the holding portion 56 configured so that the guide pin 42 is inserted and held. In this case, when the slit 57 is pushed and expanded, the holding portion 56 can be expanded in accordance with the deformation of the metal plate 51, and, in this state, the guide pin 42 can be inserted into the holding portion 56. Furthermore, in a state in which the guide pin 42 is inserted and held, the guide pin 42 can be pulled out from the holding portion 56 by similarly expanding the holding portion 56. In this way, in the optical connector 10, the guide pin 42 can be attached to and detached from the pin keeper 50 while the pin keeper 50 remains assembled. As a result, it is possible to easily switch between the male and female states of the optical connector 10 without performing disassembly or the like of the optical connector 10. Moreover, when the metal plate 51 is used for the pin keeper 50 as in the optical connector 10, unlike when a resin component is used in the pin keeper 50, because it is possible to avoid a situation in which the thickness of the pin keeper 50 becomes unnecessarily large due to molding constraints, it is possible to minimize the thickness of the pin keeper 50 while ensuring the necessary mechanical strength for holding the guide pin 42. Thereby, the overall size of the optical connector 10 can be reduced.

As in the present embodiment, the optical connector 10 may include the fusion splice protection sleeve 12 for protecting a fusion splice portion 11 between the built-in fiber 43 and the optical fiber 211. In this case, because the fusion splice protection sleeve 12 remains fixed in a hardened state at a position facing the pin keeper 50, it becomes difficult to freely move the pin keeper 50 between the ferrule member 40 and the fusion splice protection sleeve 12. Even with such a structure, in the optical connector 10, the guide pins 42 can be attached to and detached from the pin keeper 50 while the pin keeper 50 remains assembled, so that the above-described effects can be achieved more effectively.

As in the present embodiment, the metal plate 51 may include the pair of side plate portions 54 and 54 and the connection portion 55 configured to connect the pair of side plate portions 54 and 54. In this case, it is possible to configure the pin keeper 50 for holding the two guide pins 42 and 42 as a single component while ensuring a path through which the built-in fiber 43 passes. In this case, compared with a configuration in which pin keepers are formed as separate components for the two guide pins, this configuration can allow a decrease in the number of components and facilitate assembly work.

As in the present embodiment, the slit 57 may extend from a side edge portion 541 of the side plate portion 54. The front housing 31 may have openings 313 and 313 formed at positions facing the opening ends 571 and 571 of the side edge portions 541 and 541. In this case, it is possible to push and expand the slits 57 and extend the holding portions 56 by inserting the extension member 100 from the openings 313 and 313 formed in the front housing 31 and causing the extension member 100 to abut against the inner surfaces S57 of the slits 57 of the side plate portions 54 and 54. In the above-described configuration, if the opening end 571 of the slit 57 is formed in another side edge portion extending in a direction intersecting the side edge portion 541, the side wall of the front housing 31 facing the other side edge portion is easily a portion where a guide groove for guiding a latch of another component is formed and the thickness of the side wall is relatively thin. In this case, if the opening is formed in the side wall, there is a concern that a defect such as damage may occur at a peripheral part of the opening. In contrast, when the slit 57 is formed in the side edge portion 541, it is possible to avoid the above-described defect as in the above-described configuration.

As in the present embodiment, the connection portion 55 may include a first connection plate portion 551 that connects the side plate portions 54 and 54 in the Y-axis direction, and a second connection plate portion 552 that connects the side plate portions 54 and 54 in the Y-axis direction at a position spaced apart from the second connection plate portion 552. The opening H55 surrounded by the side plate portions 54 and 54, the first connection plate portion 551, and the second connection plate portion 552 may be formed in the connection portion 55. In this case, because the side plate portions 54 and 54 are firmly supported by the first connection plate portion 551 and the second connection plate portion 552, it is possible to avoid the large deformation of the metal plate 51 when the slits 57 are pushed and expanded by the extension member 100. Thereby, the guide pins 42 and 42 can be inserted into and removed from the pin keeper 50 more reliably.

As in the present embodiment, when viewed in the Z-axis direction, the center C56 of a virtual circle L56 inscribed to the inner surfaces S57 and S57 constituting the holding portion 56 may be shifted to the opposite side of the connection portion 55 in the Y-axis direction with respect to the center line L53 of an intermediate portion 573 of the slit 57 extending from the opening end 571 to the holding portion 56. When the side plate portions 54 and 54 are connected by the first connection plate portion 551 and the second connection plate portion 552, if the slits 57 are pushed and expanded by the extension member 100, the side plate portions 54 and 54 easily deform to tilt outward away from each other without tilting inward toward each other. As in the configuration described above, when the center C56 of the virtual circle L56 is shifted from the center line L53 of the intermediate portion 573, the guide pins 42 and 42 can more easily detached from the holding portions 56 and 56 when the slits 57 are pushed and expanded and the side plate portions 54 and 54 tilt outward. Thereby, the insertion and removal of the guide pins 42 and 42 into and from the pin keeper 50 can be performed more reliably.

In the present embodiment, the metal plate 51 may include the main plate portion 53 in which the slits 57 are formed, the auxiliary plate portions 58 arranged on the opposite side of the rear end surface 46 with the main plate portion 53 sandwiched therebetween, and the connection portion P51 configured to connect the main plate portion 53 and the auxiliary plate portion 58. The auxiliary plate portion 58 may be arranged to overlap the compression coil spring 13 when viewed in the Z-axis direction. In this case, the auxiliary plate portion 58 can be easily formed, for example, by sheet-metal processing for bending a part of the metal plate 51. Furthermore, by arranging the auxiliary plate portion 58 formed in this way to overlap the compression coil spring 13, the first end of the compression coil spring 13 held by the holding portion 56 can be received by the auxiliary plate portion 58. In this case, because a configuration for receiving the first end of the compression coil spring 13 can be implemented by a part of the metal plate 51, it is unnecessary to add another component for receiving the first end of the compression coil spring 13. Accordingly, in the above-described configuration, it is possible to more reliably implement a configuration in which the overall thickness of the pin keeper 50 is reduced as much as possible using the metal plate 51.

As in the present embodiment, the front surface 583 of the auxiliary plate portion 58 may include the recess 585 that receives the proximal end 422 of the guide pin 42, and the rear surface 584 of the auxiliary plate portion 58 may include the protrusion 587 formed at a position corresponding to the recess 585, and the flat portion 588 that surrounds the protrusion 587 and receives one end of the compression coil spring 13. In this way, when the proximal end 422 of the guide pin 42 is accommodated in the recess 585 formed on the front surface 583 of the auxiliary plate portion 58, even if the auxiliary plate portion 58 is brought close to the main plate portion 53, it is possible to avoid the interference of the proximal end 422 of the guide pin 42 with the auxiliary plate portion 58. Furthermore, because the protrusion 587 formed at the position corresponding to the recess 585 enters an inner space of the compression coil spring 13, and the first end of the compression coil spring 13 is supported on the flat portion 588 surrounding the protrusion 587, it is possible to avoid pressing down the compression coil spring 13 by the height of the protrusion 587 formed by the recess 585. Thereby, because the overall thickness of the pin keeper 50 can be further reduced, further miniaturization of the size can be achieved.

The present disclosure is not limited to the embodiment described above and various modifications are possible. For example, an example in which the configuration of the present disclosure is applied to a type of optical connector 10 into which the fusion splice protection sleeve 12 is built has been described in the above-described embodiment. However, the configuration of the present disclosure can also be applied to a type of optical connector into which the fusion splice protection sleeve 12 is not built (in other words, that does not have the fusion splice portion 11 inside the housing 30).

A case where the metal plate 51 is formed as a single component when the side plate portions 54 and 54 holding the two guide pins 42 and 42 are connected by the connection portion 55 has been described in the above-described embodiment. However, the metal plate may include two components, i.e., a component corresponding to one side plate portion and a component corresponding to the other side plate portion. In the embodiment described above, a case where the pair of side plate portions 54 and 54 are connected by the first connection plate portion 551 and the second connection plate portion 552 has been described. However, the pair of side plate portions may be connected by only one of the first connection plate portion and the second connection plate portion.

In the embodiment described above, a case where the pair of slits 57 and 57 extend in the X-axis direction from the side edges 533 of the main plate portion 53 has been described. However, for example, the pair of slits may extend in another direction from another side edge of the metal plate. In the embodiment described above, the optical connector 10 in a state in which the pair of guide pins 42 and 42 are inserted into the ferrule member 40 has been described. However, when the optical connector 10 is replaced with a female connector, the pair of guide pins 42 and 42 become unnecessary, and therefore, the guide pins 42 and 42 may not be inserted into the ferrule member 40.

### Reference Signs List

10 Optical connector
11 Fusion splice portion
12 Fusion splice protection sleeve
20 Optical fiber cable
21 Optical fiber tape core
22 Sheath
23 Tension member
30 Housing
31 Front housing
32 Rear housing
33 Outer housing
40 Ferrule member
41 Front end surface
42 Guide pin
43 Built-in fiber (first optical fiber)
45 Flange portion
46 Rear end surface
47 Introduction hole
48 Fiber hole
49 Guide hole
50 Pin keeper
51 Metal plate
53 Main plate portion
54 Side plate portion
55 Connection portion
56 Holding portion
57 Slit
58 Auxiliary plate portion
60 Crimp seat
70 Ring
80 Boot
100 Extension member
211 Optical fiber (second optical fiber)
212 Resin coating
311, 313 Opening
312 Engagement hole
322 Latch
421 Insertion portion
422, 581 Proximal end
531, 583 Front surface
532, 584 Rear surface
533, 534, 535, 536 Side edge
541 Side edge portion
551 First connection plate portion
552 Second connection plate portion
571 Opening end
573 Intermediate portion
574 Tapered portion
575 Straight portion
577 Distal end portion
582 Distal end
585, 589 Recess
586 Flat portion
587 Protrusion
588 Flat portion (support portion)
C56 Center
H55 Opening (fiber passage portion)
L53, L575 Center line
L56 Virtual circle
P51 Connection portion
S57 Inner surface
W57 Width

## Claims

1. An optical connector comprising:
a ferrule member including a rear end surface, an introduction hole which opens in the rear end surface and into which an optical fiber can be introduced, and a guide hole which opens in the rear end surface and into which a guide pin can be inserted, the ferrule member holding the optical fiber introduced from the introduction hole;
a pin keeper which faces the rear end surface and can hold the guide pin protruding from the guide hole; and
a housing configured to accommodate the ferrule member and the pin keeper,
wherein the pin keeper includes:
a metal plate configured to face the rear end surface; and
a slit formed to extend from a side edge of the metal plate when viewed in a plate thickness direction of the metal plate, the slit including a holding portion configured so that the guide pin is inserted and held.

2. The optical connector according to claim 1, wherein the metal plate includes:
a pair of side plate portions arranged at a pair of positions where the optical fiber is sandwiched when viewed in the plate thickness direction, the pair of side plate portions each having the slit formed therein; and
a connection portion including a fiber passage portion configured to allow passage of the optical fiber between the pair of side plate portions and configured to connect the pair of side plate portions.

3. The optical connector according to claim 2, wherein each of the pair of side plate portions includes a side edge portion extending in an alignment direction of the pair of side plate portions,
wherein the slit extends from the side edge portion,
wherein an opening end of the slit is formed in the side edge portion, and
wherein a pair of openings facing the opening ends of the pair of side plate portions are formed in the housing.

4. The optical connector according to claim 3, wherein the connection portion includes:
a first connection plate portion configured to connect the pair of side plate portions in the alignment direction; and
a second connection plate portion configured to connect the pair of side plate portions in the alignment direction at a position spaced apart from the first connection plate portion, and
wherein the fiber passage portion is an opening surrounded by the pair of side plate portions, the first connection plate portion, and the second connection plate portion.

5. The optical connector according to claim 4,
wherein the slit includes an intermediate portion extending from the opening end of the side edge portion to the holding portion, and
wherein, when viewed in the plate thickness direction, a center of a virtual circle inscribed to an inner surface constituting the holding portion is shifted to an opposite side of the connection portion in the alignment direction with respect to a center line of the intermediate portion.

6. The optical connector according to any one of claims 1 to 5, further comprising a spring arranged on an opposite side of the rear end surface with the pin keeper sandwiched therebetween,
wherein the metal plate includes:
a main plate portion configured to face the rear end surface and have the slit formed therein;
an auxiliary plate portion arranged on an opposite side of the rear end surface across the main plate portion; and
a connection portion configured to connect the main plate portion and the auxiliary plate portion, and
wherein the auxiliary plate portion is arranged at a position overlapping the spring when viewed in the plate thickness direction.

7. The optical connector according to claim 6, wherein the auxiliary plate portion has:
a front surface facing the main plate portion; and
a rear surface facing an opposite side of the front surface,
wherein the front surface includes a recess capable of accommodating an end portion of the guide pin, and
wherein the rear surface includes:
a protrusion formed at a position corresponding to the recess; and
a support portion configured to surround the protrusion and receive an end portion of the spring.

8. The optical connector according to any one of claims 1 to 7, further comprising a fusion splice protection sleeve arranged on an opposite side of the rear end surface with the pin keeper sandwiched therebetween and configured to protect a fusion splice portion between a first optical fiber that is the optical fiber configured to extend from the introduction hole and a second optical fiber that is fusion-spliced to the first optical fiber, the fusion splice protection sleeve being accommodated in the housing together with the ferrule member and the pin keeper.

9. A pin keeper for holding a guide pin protruding from a ferrule member of an optical connector, the pin keeper comprising:
a metal plate; and
a slit formed to extend from a side edge of the metal plate when viewed in a plate thickness direction of the metal plate,
wherein the slit includes a holding portion configured so that the guide pin is inserted and held.
